Europäisches Patentamt

European Patent Office

Office européen des brevets

(11) Publication number: **0 083 759 B1**

(12) **EUROPEAN PATENT SPECIFICATION**

(45) Date of publication of patent specification: **26.08.87**

(51) Int. Cl.⁴: **G 01 N 21/88,** F 16 L 55/00, G 01 M 3/00

(21) Application number: **82111638.1**

(22) Date of filing: **15.12.82**

(54) **Device for monitoring the interior of a conduit.**

(30) Priority: **07.01.82 JP 1040/82 u**
**01.02.82 JP 15425/82**

(43) Date of publication of application:
**20.07.83 Bulletin 83/29**

(45) Publication of the grant of the patent:
**26.08.87 Bulletin 87/35**

(84) Designated Contracting States:
**AT DE FR GB IT NL**

(56) References cited:
**DE-A-2 052 672**
**DE-B-2 436 762**
**DE-B-2 801 146**
**DE-U-1 856 319**
**US-A-2 845 485**
**US-A-3 238 448**

**Patent Abstracts of Japan vol. 4, no. 78, 6 June 1980**

(73) Proprietor: **SUMITOMO ELECTRIC INDUSTRIES LIMITED**
**No. 15, Kitahama 5-chome Higashi-ku Osaka-shi Osaka 541 (JP)**

(72) Inventor: **Ono, Kimizo c/o Osaka Works of Sumitomo**
**Electric Industries, Ltd. No. 1-3, Shimaya 1-chome**
**Konohana-ku Osaka-shi Osaka (JP)**
Inventor: **Tsuno, Koichi c/o Osaka Works of Sumitomo**
**Electric Industries, Ltd. No. 1-3, Shimaya 1-chome**
**Konohana-ku Osaka-shi Osaka (JP)**
Inventor: **Nishiwaki, Yoshikazu c/o Osaka Works of Sumitomo**
**Electric Industries, Ltd. No. 1-3, Shimaya 1-chome**
**Konohana-ku Osaka-shi Osaka (JP)**
Inventor: **Iwai, Toru c/o Osaka Works of Sumitomo**
**Electric Industries, Ltd. No. 1-3, Shimaya 1-chome**
**Konohana-ku Osaka-shi Osaka (JP)**

**0 083 759**

(72) Inventor: **Nishikawa, Mitsuru c/o Osaka Works of Sumitomo Electric Industries, Ltd. No. 1-3, Shimaya 1-chome Konohana-ku Osaka-shi Osaka (JP)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath Maximilianstrasse 58 D-8000 München 22 (DE)**

## Description

The present invention relates to a device for monitoring the interior of a conduit according to the generic clause of claim 1.

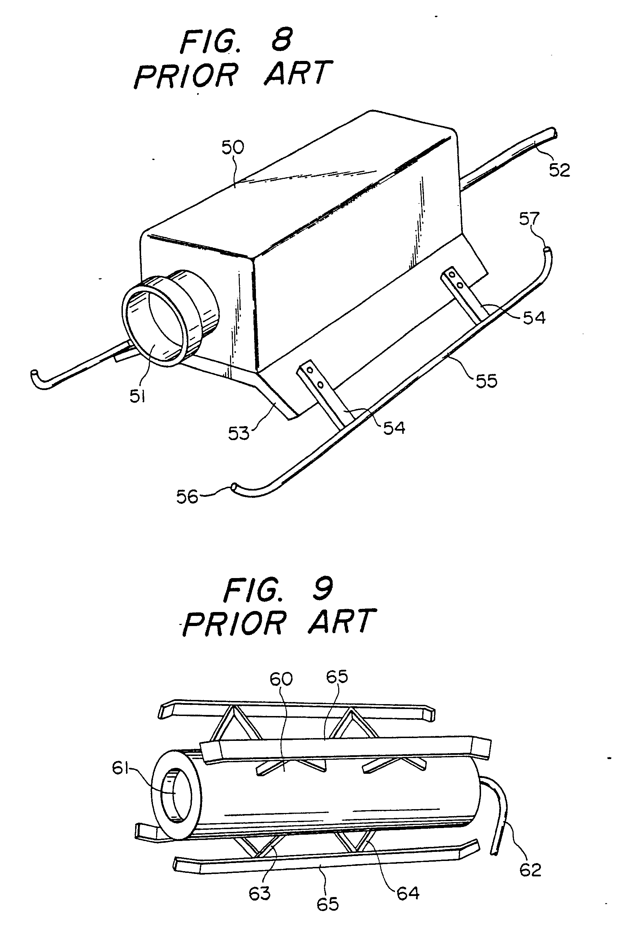

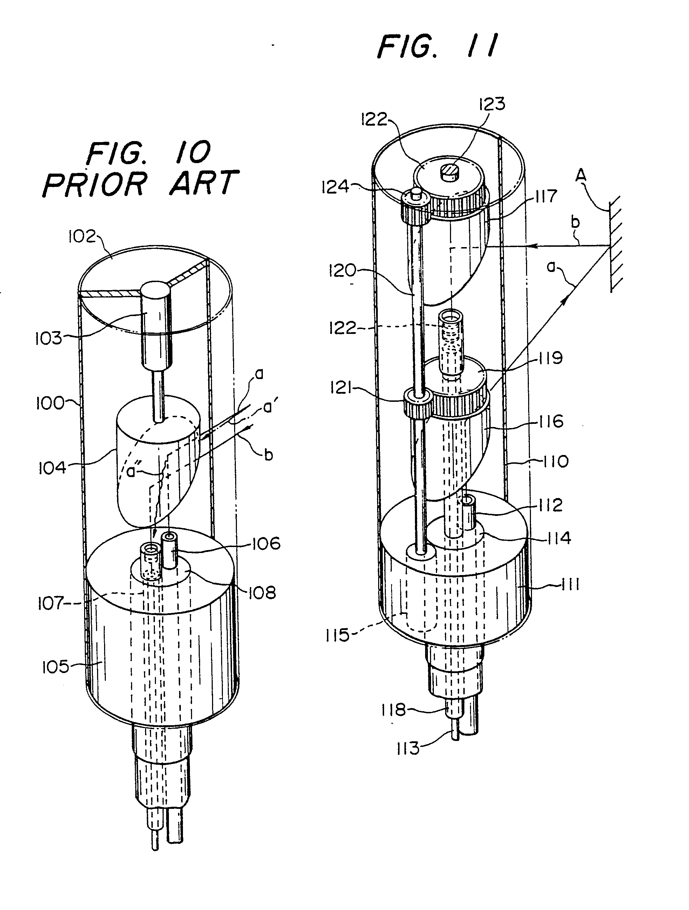

Such a device is depicted in Fig. 8 and Fig. 10 and is used typically for monitoring conduits such as a water pipe, a gas pipe or a hole bored in the ground.

When a television camera is inserted into a conduit to inspect the wall of the conduit for any damage or cracks that may cause water leakage, it is desirable that the television camera be supported centrally within the conduit. Conventional television cameras for use in conduit inspection have parallel support legs attached to lower and lateral sides of the camera for supporting the camera within the conduit. Fig. 8 of the accompanying drawings is a perspective view of such a prior television camera used for conduit inspection. A television camera 50 shown in Fig. 8 is of box-shaped configuration elongated in the axial direction, and has a monitoring detector 51 on its front end. A cable 52 is led out of the rear end of the television camera 50 up to a television monitoring vehicle on the ground. Inclined leg attachment plates 53 are affixed to the bottom of the television camera 50. A pair of legs 54 are attached to each of the leg attachment plates 53 and support on their distal ends a horizontal support foot 55 having front and rear slider ends 56, 57 for slidable movement through a conduit to be monitored for inspection. The legs on such a television camera are of a fixed length.

It is desirable that the monitoring detector 51 be located on a central axis of the conduit to be monitored. Accordingly, the inside diameter of the conduit with which the television camera can be used is determined. For a different conduit inside diameter, legs of a different length matching that inside diameter should be attached. This requires replacement of the legs 54 and the support feet 55, resulting in a poor efficiency in preparing the television camera for use.

When the television camera 50 while in use in a conduit comes across a varying inside diameter, bumps, recesses, or obstacles in the conduit, the television camera 50 cannot be moved smoothly along since the fixed length of the legs make it difficult for the camera 50 to follow such irregularities in the conduit during advancing movement of the camera.

When the monitoring detector 51 is facing forward, the requirement that the television camera 50 be kept on the central axis of the conduit is less essential. However, since the monitoring detector 51 thus oriented will provide an image of the conduit wall only peripherally around its field of view, it would be difficult to make a detailed localized observation of the conduit wall. It is therefore preferable that the monitoring detector have on its front end a rotatable mirror which rotates about an axis thereof for continuously imaging the wall surface in a direction normal to the axis. A detector with such a rotatable field of view will enable a more detailed inspection of the conduit wall.

A television camera with only two support feet is relatively unstable and is in danger of turning over, since the wall of the conduit is not flat but cylindrical. To avoid such a difficulty, conduit inspection television cameras having four feet have been used. Fig. 9 is a perspective view of a known conduit inspection television camera with four feet. A television camera 60 has a monitoring detector 61 on its front end and a cable 62 on its rear end. Four pairs of front legs 63 and rear legs 64 are fixed to the television camera 60 around its circumference. Support feet 65 are fixed to distal ends of the legs 63, 64.

The television camera 60 shown in Fig. 9 is more stable since it is supported by the four feet. However, it is relatively difficult to support the monitoring detector 61 on a central axis of the conduit being inspected. Further, it is still the case that the legs 63, 64 need to be replaced for conduits of different inside diameters.

The monitoring detectors of these conventional television cameras do not have to be located on the central axis of the conduit if the detectors are directed forwardly. However, in monitoring devices having a monitoring detector facing laterally with its direction of observation rotatable, the detector lens should be spaced a constant distance from the conduit wall at all times for correct pickup and transmission of an image of the conduit wall. If the distance between the lens and mirror of the detector and the inner conduit wall changed during one revolution of the mirror for continuous observation of the inner conduit wall, then the position of the lens would need constant adjustment.

Shown in Fig. 10 is a monitoring detector with a rotatable field of view for ascertaining whether or not the inner surface of a conduit is flawed. This prior monitoring detector comprises a transparent cylindrical casing 100 having a top wall 102 on which is mounted a reflecting mirror 104 rotatable by a motor 103. The transparent cylindrical casing 100 also has on its lower end a base 105 with a holder 108 inserted therethrough which supports a light guide and an image transmission fiber 107.

The reflecting mirror 104 is shared by a ray $a$ of illumination light emitted from the light guide 106 and a ray $b$ of object light reflected from an object being monitored and entering the image transmission fiber 107. The conventional monitoring detector is disadvantageous in that a portion $a'$ of the ray $a$ of illumination light which is reflected from a surface of the casing 100, or a ray $a''$ of light reflected by a flaw or dirt on the surface of the reflecting mirror 104 due to diffuse reflection, tend to fall on the image transmission fiber 107, resulting in difficulty in seeing a portion of the object being monitored.

Further, conventional television cameras for monitoring the interior of a conduit are poor in versatility since they can be used only for those conduits of inside diameters for which they are designed. Still further,

3

even when used in a conduit having an optimum inside diameter, the television camera will have difficulty in advancing smoothly due to irregularities such as projections and recesses in the conduit wall.

In the DE—B—2436762 a device is disclosed which is a forward looking device and is, therefore, not able to laterally view the interior of the conduit.

From the DE—B—28101146 two spaced apart mirrors are known, one for the illuminating light and one for the image side. However, the mirrors are not rotatable with respect to the light guides for transmitting the illuminating light and for transmitting the image light.

From DE—U—1856319 a device with a single rotatable mirror is known which only receives image light reflected from the interior surface of the conduit. However, the illuminating light is not directed via a mirror, but a torus shaped light source is used.

It is the object of the present invention to provide a device for monitoring the interior of a conduit, having a monitoring detector facing laterally with its direction of observation rotatable and which allows the viewing without the negative effects of diffused light reflections.

To solve the task the invention provides a device of the type above additionally comprising the characterizing features of claim 1.

Brief description of the drawings

The construction, operation and advantages of the present invention will now be described with reference to the drawings which illustrate embodiments of the invention. In the drawings:

Fig. 1 is a schematic diagram of a conduit inspection apparatus employing a device for monitoring the interior of a conduit according to the present invention;

Fig. 2 is a longitudinal cross-sectional view of a device for monitoring the interior of a conduit according to an embodiment of the present invention;

Fig. 3 is a cross-sectional view taken along line III—III of Fig. 2;

Fig. 4 is a longitudinal cross-sectional view of a monitoring device having six sliders;

Fig. 5 is a fragmentary cross-sectional view of a monitoring device according to another embodiment, in which a spring acts to space the holders away from each other;

Fig. 6 is a schematic diagram of a quadrilateral formed of holders, arms, and a slider;

Fig. 7 is a fragmentary cross-sectional view of a monitoring device according to still another embodiment, in which crossed arms support a slider;

Fig. 8 is a perspective view of a conventional conduit inspection television camera having two fixed feet;

Fig. 9 is a perspective view of a conventional conduit inspection television camera having four fixed feet;

Fig. 10 is a perspective view, partly cut away, of a conventional monitoring detector; and

Fig. 11 is a perspective view, partly cut away, of a monitoring detector according to the present invention.

Detailed description of the invention

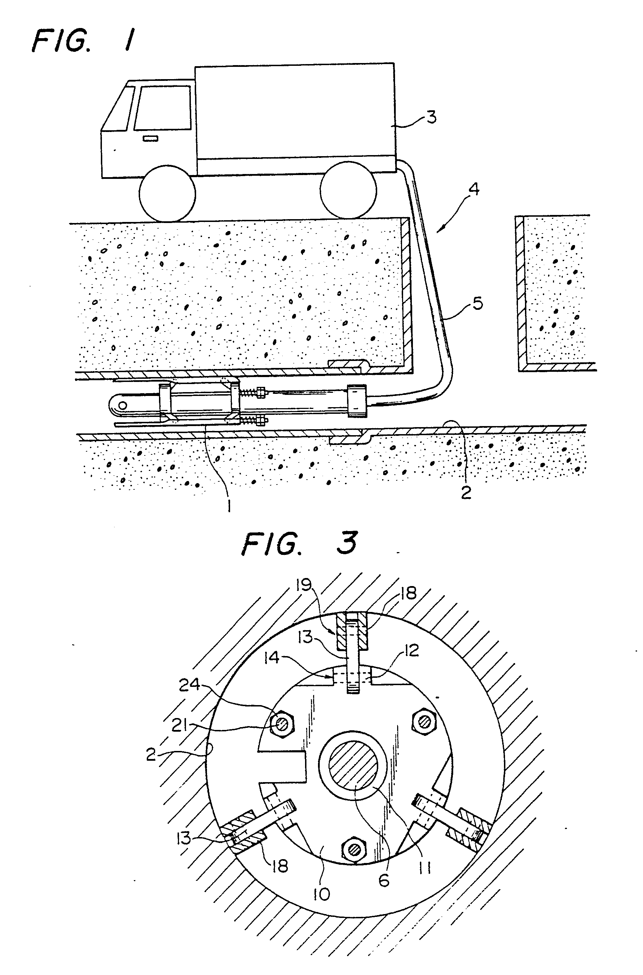

Fig. 1 is a schematic elevational view of a conduit inspection apparatus. A device 1 according to an embodiment of the present invention for monitoring the interior of a conduit is inserted, when in use, into an underground conduit 2. A cable 5 extends through a manhole 4 from a television monitoring vehicle 3 above ground and is connected to the device 1.

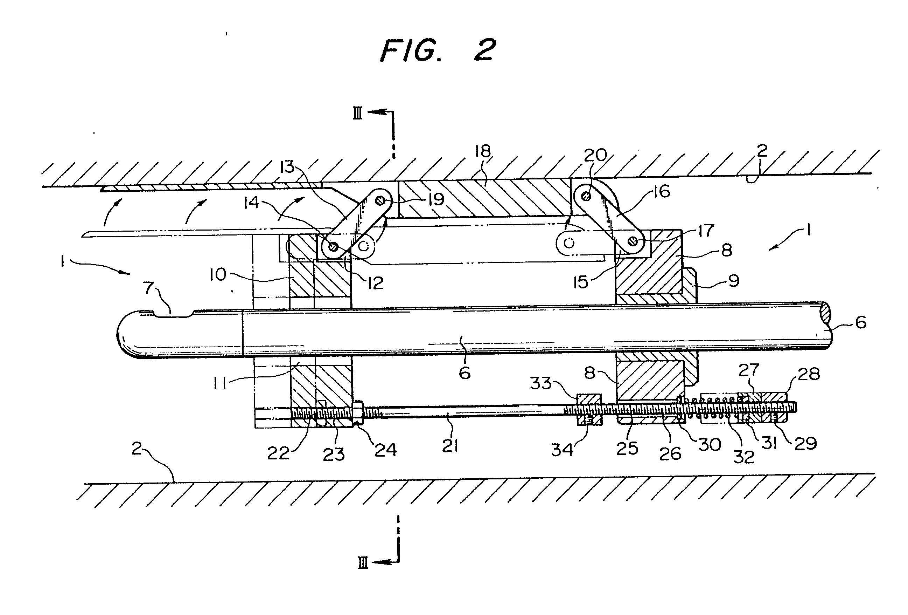

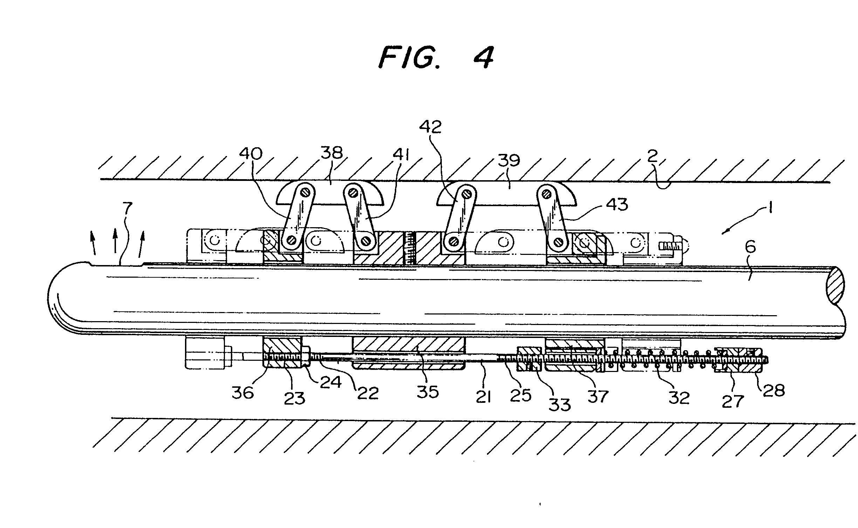

Fig. 2 is an enlarged longitudinal cross-sectional view of the device 1, and Fig. 3 is a cross-sectional view taken along line III—III of Fig. 2. As shown in these Figures, a body 6 of the monitoring device is of a cylindrical shape having a longitudinal axis extending parallel to the conduit 2 and containing an optical fiber assembly comprising an illumination light transmission fiber for guiding illumination light into the conduit 2 and an image transmission fiber for transmitting an image of the inner wall of the conduit 2 to a television camera. A power line may be disposed parallel to the optical fiber assembly for supplying electric power for controlling the device 1. The optical fiber assembly and the power line are bundled together as the cable 5.

At the front end of the body 6 is an opening in which a monitoring detector 7 is mounted. Although not shown, the body 6 houses therein a suitable drive source for rotating the monitoring detector 7 and hence changing the direction of observation around the axis of the body 6.

The body 6 is supported at a rear portion thereof by an annular fixed holder 8 and a body holder ring 9. The body holder ring 9 is inserted between the fixed holder 8 and the body 6 for coupling them closely together. An annular movable holder 10 is loosely fitted over the body 6 at a position forward of the fixed holder 8 and the body holder ring 9. The movable holder 10 has a central through-hole 11 through which the body 6 extends with a clearance therebetween to allow the movable holder 10 to move freely with respect to the body 6.

The movable holder 10 has three arm attachments 12 angularly spaced at 120° intervals around its periphery. A front arm 13 is pivotably attached at one end thereof to each of the arm attachments 12 by a first pin 14. The fixed holder 8 has three similar arm attachments 15 angularly spaced at 120° intervals around its periphery, so that the arm attachments 12, 15 are thus located symmetrically with respect to the central axis of the body 6. The attachments 12, 15 are axially aligned along the central axis of the body 6. To each of the arm attachments 15, there is pivotably attached one end of a rear arm 16 by a second pin 17.

Sliders 18 in the form of elongate rods are pivotably mounted at their front and rear portions to each pair of front and rear arms 13, 16 by third and fourth pins 19 and 20, respectively, for direct contact with the inner wall of the conduit 2. A total of three such sliders 18 are provided at positions angularly spaced at 120° intervals about the central axis of the body 6. Three holder connecting rods 21 are also spaced at 120° intervals and are angularly offset by 60° from the sliders 18. These connecting rods interconnect the fixed holder 8 and the movable holder 10.

Each of the holder connecting rods 21 has an externally threaded end portion 22 threaded into an internally threaded portion 23 in the movable holder 10. The externally and internally threaded portions 22, 23 are securely fastened together by a nut 24 threaded over the externally threaded portion 22. The holder connecting rod 21 also has a rear externally threaded end portion ·25 which is not secured to the fixed holder 8 but instead extends through an aperture 26 in the fixed holder 8.

A spring support nut 27 and a retainer nut 28 are threaded over the rear end of the externally threaded end portion 25. A set screw 29 is laterally threaded into the retainer nut 28 to abut against the externally threaded end portion 25. This prevents the retainer nut 28 from rotating and also secures the same to the holder connecting rod 21.

The aperture 26 in the fixed holder 8 has a rear recess and the spring support nut 27 has a similar front recess, and rings 30, 31 are fitted respectively in the rear and front recesses. A spring 32 is disposed around the holder connecting rod 21 and between the fitted rings 30, 31. The spring 32 normally urges the spring support nut 27 to move rearwardly away from the fixed holder 8, and hence resiliently urges the movable holder 10 toward the fixed holder 8. Instead of individual springs for each connecting rod, the same purpose may be served by employing a single spring which surrounds all of the three holder connecting rods.

A stop nut 33 is threaded over the externally threaded end portion 25 of the holder connecting rod 21 in front of the fixed holder 8. The position of the stop nut 33 is fixed by a set screw 34. The stop nut 33 serves to define the stroke by which the spring 32 can expand.

Although not shown, a suitable traction mechanism such as a wire is attached to the movable holder 10 or the fixed holder 8 at its front and rear ends. The device 1 can thus be moved back and forth through the conduit 2 by pulling the wire.

The device 1 for monitoring the interior of the conduit 2 will operate as follows:

When the device 1 is located outside of the conduit 1, the spring 32 is expanded to keep the stop nut 33 held against the front end of the fixed holder 8 with the holder connecting rods 21 held at rest. At this time, the movable holder 10 is closest to the fixed holder 8, and the distance between the first and second pins 14, 17 is approximately the same as the distance between the third and fourth pins 19, 20. At this time, the front and rear arms 13, 16 are raised to spread the sliders 18 radially outwardly.

When the device 1 is to be inserted into the conduit 2, the holder connecting rods 21 are fully pushed forward to displace the movable holder 10 in the forward direction. As the pins 14 and 17 are pulled away from one another, the front and rear arms 13, 16 are brought into their retracted positions to move the sliders 18 radially inwardly as shown by the dot-and-dash lines in Fig. 2. The radially contracted device is then placed into the conduit 2 and the holder connecting rods 21 are released. The movable holder 10 is now displaced rearwardly under the resiliency of the springs 32, whereupon the front and rear arms 13, 16 are raised to spread the sliders 18 radially outwardly into contact with the inner wall surface of conduit 2.

The device 1 is stably held at rest in the conduit 2 with the sliders 18 abutting against the wall surface of the conduit 2. Since the three sliders 18 are all displaced by the same mechanism, they are displaced by equal amounts from the center of the body 6, and the center of the body 6 is therefore aligned with the center of the conduit 2. In other words, the outer surfaces of the sliders 18 are equally spaced from the center of the body 6, and the point equally spaced from three different points on a circle is the center of the circle.

Since the sliders 18 are only resiliently urged against the inner wall surface of the conduit 2, the device 1 can be moved back and forth in the conduit 2 by the traction mechanism while overcoming frictional forces acting between the sliders 18 and the inner wall surface of the conduit 2. While the device 1 is being moved through the conduit 2, the body 6 is positioned on the central axis of the conduit 2 at all times.

Where the conduit 2 has different inside diameters, i.e., where a change in the diameter is encountered, the sliders 18 can tilt in conformity with an inclined inner wall portion of the conduit 2. The slider 18, the fixed holder 8, the movable holder 10, the front arm 13, and the rear arm 16 jointly constitute a quadrilateral having one side (between the first and second pins 14, 17) variable. The quadrilateral itself has a variable shape, but its shape is determined by the inner wall of the conduit 2. This allows the sliders 18 to be tilted in conformity with an inclined inner wall surface of the conduit 2 where it has an increasing or decreasing inside diameter, thereby permitting the device 1 to move along smoothly in the conduit 2.

The body 6 is always kept in alignment with the central axis of the conduit 2 while the sliders 18 slide along an inclined wall surface of the conduit 2. The sliders 18 can be displaced radially inwardly or outwardly by any bump or recess or obstacle in the conduit 2 so that the sliders 18 can move smoothly over such an obstruction.

The number of the sliders 18 can be suitably selected provided it is three or more, and they are preferably symmetrically positioned around the body 6 at equal angular intervals. The sliders 18 may also be disposed in axially spaced groups, such as two or three groups.

Where the sliders are disposed at equal intervals of one *m*th of a single revolution about the body 6, and are provided in *n* axially spaced groups, the total number N of the sliders can be given by:

$$N = m \cdot n \tag{1}$$

The embodiment shown in Figs. 2 and 3 has m=3, n=1. The preferable limitations on m, n are expressed by the following inequalities:

$$m \geqq 3 \tag{2}$$

$$n \geqq 1 \tag{3}$$

Fig. 4 is a cross-sectional view of a device having six sliders with m=3 and n=2. As shown in Fig. 4, a central fixed holder 35, a front movable holder 36, and a rear movable holder 37 are fitted over a body 6. Front sliders 38 are supported by first and second arms 40, 41 between the front movable holder 36 and the fixed holder 35. Rear sliders 39 are supported by first and second arms 42, 43 between the fixed holder 35 and the rear movable holder 37. Holder connecting rods 21 movably extend through apertures 26 in the fixed holder 35 and support springs 32 for urging the front and rear movable holders 36, 37 toward each other.

Since the front movable holder 36 is biased to move rearwardly, the first and second arms 40, 41 are raised to spread the front sliders 38 radially outwardly. Likewise, since the rear movable holder 37 is biased to move forwardly, the third and fourth arms 42, 43 are raised to spread the rear sliders 39 radially outwardly. Thus, the front and rear sliders 38, 39 are pressed against the inner wall surface of the conduit 2, while the body 6 is kept centrally located in the conduit 2. The operation is substantially the same as that of the embodiment of Figs. 2 and 3.

The sliders provided in the front and rear groups can support the body 6 more stably when the device 1 moves through a section of the conduit 2 which has a changing inside diameter.

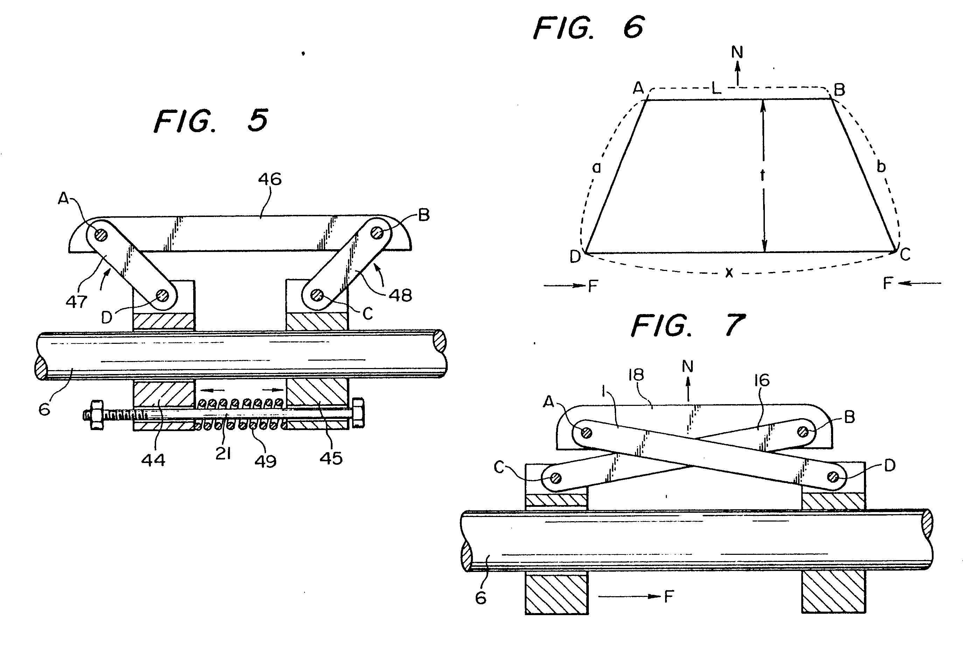

In the foregoing embodiments, two or more holders are disposed around the body 6 and are urged toward each other by springs to spread the sliders radially outwardly. Alternatively, springs may be disposed to normally urge the holders to move away from each other. Such an arrangement is shown in Fig. 5. As illustrated in Fig. 5, a device comprises holders 44, 45 a slider 46, a first arm 47, and a second arm 48, with a spring 49 acting between the holders 44, 45 for normally urging them to move away from each other. The slider 46 is pivotably attached to the first and second arms 47, 48 by pins A, B and the first and second arms 47, 48 are pivotably mounted on the holders 44, 45 by pins D, C. When the spring 49 is fully compressed initially, the axial distance between the pins D, C is smaller than the axial distance between the pins A, B. As the spring 49 expands, the slider 46 is moved radially outwardly.

Fig. 6 schematically shows the holders, arms, and slider of the device shown in Fig. 5, which jointly define a quadrilateral. The points A, B, C, D represent the pins A, B, C, D, respectively, shown in Fig. 5. The pins A, D and the pins B, C are spaced apart from each other by distances a and b, respectively, and the pins A, B are spaced apart from one another by a distance L. These distances are constants, while the distance x between the pins C and D is variable.

Since the quadrilateral is variable in shape with its bottom in a fixed position, the points A, B are movable when the side CD remains in its fixed position but varies its length. No special condition between the distances a, x, b, and L need be established to bring the side AB into close contact with the conduit wall, e.g., it is not necessary for the length a to be equal to the length b.

The direction of force F of the spring 49 is defined as being positive when acting to move the points C, D toward each other. When the domain {x} for the distance x between the points C, D is greater than L, the force F may be considered positive, and when the domain {x} is smaller than L, the force F may be considered negative. Thus,

(I)   when $L < \{x\}$, $F > 0$

(II)   when $L > \{x\}$, $F < 0$.

Under the condition that the side AB is parallel to the side CD, the distance t between the sides AB, CD can be given by:

$$t = \frac{2}{y} \sqrt{s(s-a)(s-b)(s-y)} \tag{4}$$

where

$$y = x - L \tag{5}$$

6

$$s=\frac{a+b+y}{2} \qquad (6)$$

Assuming the vertical drag the slider has on the conduit wall is N, and the resilient force of the spring is F, the following relationship results from the principle of virtual work:

$$N\ dt=-F\ dx \qquad (7)$$

The ratio between F and N can be derived from the equations (4) through (7). For the sake of simplicity, assume

$$a=b \qquad (8)$$

The spring force F is proportional to the elongation (y+a constant) of the spring, a condition which is true in the range in which Hooke's law is effective. Then,

$$dF=k\ dy \qquad (9)$$

where k is a proportionality constant (spring constant). By integrating the equation (9),

$$F=k(y+y_0) \qquad (10)$$

where $y_0$ is a positive constant dependent on the position where an end of the spring is fixed. In the illustrated embodiment, this positive constant is a parameter variable by adjusting the spring support nut 27 and the retainer nut 28.

From the above equations, the vertical drag N can be expressed by the following equation:

$$N=\frac{2k\ (y+y_0)\ \sqrt{a^2-\left(\dfrac{y}{2}\right)^2}}{y} \qquad (11)$$

When y=0, the sides AD and BC in Fig. 6 are parallel to each other and the sides AB, BC, CD, DA constitute a rectangle. At this time, the slider is displaced to the farthest radially outward position. Since it is not preferable to displace the slider all the way to the position where y=0, the domain for y is selected to be:

$$\begin{array}{lll} \text{(I)} & 0<y<2a & \text{(Figs. 2 and 4)} \\ & (L<x<L+2a) & \end{array}$$

$$\begin{array}{lll} \text{(II)} & -2a<y<0 & \text{(Fig. 5)} \\ & (L-2a<x<L) & \end{array}$$

An examination of equation (11) shows that the greater the distance that the slider is spread radially outwardly, the larger the force with which the slider is pressed against the conduit wall. Accordingly, the slider is pressed against the wall with a greater force for a conduit having a larger inside diameter.

The equation (11) diverges at the limit of y=0. Namely, the vertical drag N becomes divergent when the front and rear arms extend perpendicularly to the axis of the body to fully spread the slider. As described above, the slider is not displaced all the way to the point where y=0, but when the slider is moved to a range close to the condition of y=0, the vertical drag N varies largely with the conduit diameter. The divergence can be eliminated when $y_0=0$, a condition in which the slider is in the farthest radially outward position when the spring is fully expanded to its free state.

The device can be used with various conduits of different inside diameters. The range in which the inside diameter of the conduit can vary is twice the length of the arms.

The arms may be crossed to support the slider resiliently as schematically shown in Fig. 7. The crossed arms can be of an increased length as such that the device can be used with conduits having a wider range of different inside diameters. In this arrangement, the slider is not displaced to a range close to y=0 at which the equation (11) diverges, and the vertical drag N varies less with the conduit diameter. With this arrangement, y is defined by

$$y=x+L \qquad (12)$$

**0 083 759**

The slider is employed in a region in which the distance t between the sides AB, CD is small, and the equation (11) is rewritten using t as follows:

$$N = \frac{k\ (2\sqrt{a^2-t^2}+y_0)t}{\sqrt{a^2-t^2}} \tag{13}$$

Since the arm length a is increased, the equation (13) indicates that the vertical drag N is substantially proportional to t when t is small. The slider with the crossed arms, therefore, can produce a vertical drag N which is less variable. The longer arms can adapt the device to conduits having a wider range of different inside diameters.

Although no holder connecting rod and spring are shown in Fig. 7 for the sake of brevity, the two holders are in fact coupled by a holder connecting rod and are normally urged toward each other under the resilient force of a spring.

The two crossed arms may appear less suitable for maintaining the body parallel to the conduit. However, the crossed arms can provide parallelism between the body and the conduit as with the embodiments as shown in Figs. 2 through 5. The body and the conduit are kept parallel to each other, and the body is supported centrally in the conduit at all times. Such parallelism cannot be proved geometrically in a simple enough manner to warrant inclusion herein, but it can be derived mechanically from balanced bending moments for the trapezoid configurations with the arms not crossed as shown in Figs. 2 through 6, or with the crossed arms as shown in Fig. 7.

In the embodiment of Fig. 7, the body 6 contains an image transmission fiber and a light guide for transmitting illumination light, and has a rotatable monitoring detector for detailed observation of the interior of a conduit being monitored. The body 6 may be replaced with a cable itself, provided the cable has a sufficient degree of rigidity.

A monitoring detector according to the present invention will now be described with reference to Fig. 11. The monitoring detector of this invention comprises a transparent cylindrical casing 110 having on its lower end a base 111 inserted and fixed therein. To the base 111, there are affixed a holder 114 supporting a light guide 112 and an image transmission fiber 113, and a motor 115. The casing 110 houses therein a mirror 116 disposed centrally of the casing 110 for reflecting illumination light, and a mirror 117 disposed at an upper portion of the casing 110 for reflecting light reflected from an object being monitored.

The image transmission fiber 113 is accommodated in a pipe 118 extending upwardly through the illumination light reflecting mirror 116 at its axis of rotation. The light guide 112 is positioned off the axis of rotation of the mirror 116 and projects from an upper end face of the holder 114. The light guide 112 has an end face located in confronting relation to an inclined mirror surface of the illumination light reflection mirror 116. A gear 119 is fixed to an upper surface of the mirror 116, and the gear 119 and the mirror 116 are not rotatably supported as an integral assembly on the pipe 118. The motor 115 has a rotatable shaft 120 which extends up to an upper end of the casing 110 and is rotatably supported on a top wall of the casing 110. The shaft 120 has an intermediate pinion 121 fixed thereto and held in driving mesh with the gear 119. The image transmission fiber 113 and the pipe 118 extend upwardly beyond an upper surface of the gear 119 and a lens system 122 is mounted on the end of the fiber 113 in confronting relation to an inclined mirror surface of the object light reflecting mirror 117.

A gear 122 is secured to an upper surface of the mirror 117, and the gear 122 and mirror 117 are mounted on a shaft 123 rotatably supported on the top wall of the casing 110. The motor shaft 120 has another pinion 124 fixed to an upper end thereof and held in driving mesh with the gear 122. The numbers of teeth of the gears 119, 122 and the pinions 121, 124 are selected such that the mirrors 116, 117 will rotate in a constant relative positional relationship.

In operation, the monitoring detector according to the present invention, suitably supported, e.g., by a structure such as described above, is inserted into a conduit such as a water pipe, and then the motor 115 is energized to rotate the mirrors 116, 117. A ray a of illumination light is emitted through the light guide 112 and reflected by the mirror 116 onto an object A to be monitored. A ray b of light reflected from the object A falls on the upper mirror 117, which reflects the ray b of light into the lens system 122 and the image transmission fiber 113 for optical observation of the object A.

As described above, the prior monitoring detector has suffered from the drawback that a portion of the illumination light a may be reflected by the casing through normal reflection into the image transmission fiber 113, or a ray of light reflected from the mirror due to diffuse reflection may enter the image transmission fiber 113. With the monitoring detector according to the present invention, however, the mirrors 116, 117 which are separately disposed prevent such unwanted light of normal or diffuse reflection from falling on the image transmission fiber 113. More specifically, the direction in which such normal reflection takes place is different from the direction in which the object is monitored with the image fiber 113. This arrangement eliminates the difficulty in viewing the object being monitored due to normal reflection light, and also eliminates the difficulty in viewing the object due to diffuse reflection light since any portion of the illumination light reflected by the mirror 116 due to diffuse reflection will be blocked against entry into the image transmission fiber. Therefore, the object being monitored can be seen clearly by the observer.

8

# 0 083 759

Further, with the support arrangement of the present invention, the detector and the body in a device for monitoring the interior of a conduit can be held in alignment with the central axis of the conduit at all times.

The device can be used equally well with conduits of different inside diameters, since the arms are pivotably moved to contract or spread the sliders in conformity with various inside diameters. The sliders can also be contracted or spread in conformity with different sections of a single conduit which have varying inside diameters. When the device runs into an obstacle in the conduit being inspected thereby, the sliders can be contracted radially inwardly to move over the obstacle for smooth back-and-forth movement. The present invention is therefore highly advantageous.

## Claims

1. A device (1) for monitoring the interior of a conduit (2), said device being of the type including a monitoring detector (7), a support mechanism (6, 18, 38, 39, 46) for supporting said monitoring detector (7) centrally within said conduit (2), means defining a first light path (112) in a body (6) for providing illumination light, a first mirror (116) for reflecting said illumination light toward an interior surface (A) of said conduit, means defining a second light path (113, 118) in said body (67) for receiving light (b) reflected from the interior surface (A) of said conduit, a cable for supplying electric power to drive means (115, 121, 124) for rotating said first mirror (116) and a pipe (118) in which said means defining said second path (b) is accommodated characterized in that a second mirror (117) is provided for receiving and reflecting said light (b) reflected from the interior surface (A) of the conduit, in that the drive means (115, 121, 124) rotates both of said first and second mirrors (116, 117) so that they maintain a constant positional relationship with one another and in that the pipe (118) extends through said first mirror (116) on the axis of rotation thereof.

2. A device according to claim 1, wherein said support mechanism comprises: said body (6); a plurality of sliding members (18, 38, 39, 46) supported on said body (6) for slidably engaging the interior surface (A) of said conduit (2); and a resilient mechanism (32) for urging said sliding members for equal amounts of radially outward movement from said body (6) toward said interior surface.

3. A device according to claim 2, wherein each said sliding member (18, 38, 39, 46) has first and second ends and wherein said resilient mechanism comprises: first and second members (8, 10; 35, 36, 37; 44, 45) movable with respect to one another in a movement direction substantially parallel to an axis of said conduit (2); a plurality of first arms (16, 41, 43, 48) each pivotably connected at one end to said first member (18, 35) and at another end to a respective one of said sliding members; a plurality of second arms (13, 40, 42, 47) each pivotably connected at one end to said second member (10; 35, 36, 44) and at another end to a respective one of said sliding members (18, 38, 39, 46) and bias means (21, 22, 32, 49) for urging said first and second members for relative movement along said movement direction to urge the sliding members away from said body.

4. A device according to claim 2 or 3, wherein said plurality of sliding members (18) comprises at least three sliding members.

5. A device according to claim 4, wherein said sliding members (18, 38, 39, 46) are positioned at substantially equal angular intervals around the periphery of said body (6).

6. A device according to claim 3, wherein said first member (18, 35) has a fixed position along the axis of said body (6) and said second member (10, 36) is moving relative to said body (6) along said axis of said body.

7. A device according to claim 6, wherein bias means comprising at least one connecting rod (21) secured at one end to said first member (18, 35) and passing through said second member (10; 36), and a spring member (32) secured to said rod (21) at its other end and urging said second member toward said first member.

8. A device according to claim 3, wherein each said first arm (16, 41, 43, 48) is pivotably connected to its respective sliding member (18, 38, 39, 46) at a first position and each said second arm (13; 40, 42; 47) is pivotably connected to its respective sliding member (18, 38, 39, 46) at a second position which is closer than said first position to said second member (10; 36, 35; 44).

9. A device according to claim 8, wherein said first and second positions are separated by a distance (L) and said first and second arms (16, 41, 43; 13, 40, 42) are pivotably secured to said first and second members at positions separated by a distance (x) which is variable and always greater than (L), said bias means (32) urging said first and second members toward one another.

10. A device according to claim 8, wherein said first and second positions are separated by a distance (L) and said first and second arms (47, 48) are pivotably secured to said first and second members (44, 45) at positions separated by a distance x which is variable and always less than (L), said bias means (49) urging said first and second members away from one another.

11. A device according to claim 3, wherein said each first arm (16) is pivotably connected to its respective sliding member (18) at a first position and each said second arm (13) is pivotably connected to its respective sliding member (18) at a second position which is closer than said first position to said first member (10), said resilient mechanism (21, 32) urging said first and second members (8, 10) toward one another.

12. A monitoring device according to claim 2, wherein said plurality of sliding members comprises a

9

plurality (38; 39) of groups of sliding members, said groups being offset with respect to one another along an axis of said body (6) and each group including a plurality of sliding members disposed at substantially equal intervals about said axis of said body (6).

13. A monitoring device according to claim 4, wherein said plurality of sliding members consists two groups (38, 39) with each group consisting of three sliding members, whereby a total of six sliding members are provided.

**Patentansprüche**

1. Vorrichtung (1) zur Beobachtung des Inneren einer Leitung (2), wobei die Vorrichtung einen Beobachtungsdetektor (7), einen Trägermechanismus (6, 18, 38, 39, 46) zum Tragen des Beobachtungsdetektors (7) mittig in der Leitung (2) aufweist, mit einer Einrichtung, die einen ersten Lichtweg (112) in einem Körper (6) schafft, über den Beleuchtungslicht zur Verfügung gestellt werden kann, mit einem ersten Spiegel (116), der das Beleuchtungslicht auf eine Innenfläche (A) der Leitung richtet, mit einer Einrichtung, die einen zweiten Lichtweg (113, 118) in dem Körper (6) definiert, um Licht zu empfangen, das an der Innenfläche (A) der Leitung reflektiert wurde, mit einem Kabel zur Einspeisung elektrischer Energie, um eine Einrichtung (115, 121, 124) zu speisen, die den ersten Spiegel (116) und einen Kanal (118) dreht, in dem diese Einrichtung, die den zweiten Weg (b) bestimmt, untergebracht ist, dadurch gekennzeichnet, daß ein zweiter Spiegel (117) zum Empfangen und Reflektieren des Lichtes (b), das an der Innenfläche (A) der Leitung reflektiert wurde, vorgesehen ist und daß die Antriebseinrichtung (115, 121, 124) sowohl den ersten als auch den zweiten Spiegel (116, 117) so dreht, daß sie in einer konstanten Relativlage zueinander bleiben und daß der Kanal (118) sich durch den ersten Spiegel (116) in dessen Drehachse hindurch erstreckt.

2. Vorrichtung nach Anspruch 1, wobei der Haltemechanismus der Körper (6), mehrere Gleitelemente (18, 38, 39, 46), die auf dem Körper (6) angeordnet sind und in Gleiteingriff mit der Innenfläche (A) der Leitung (2) kommen sowie einen Federmechanismus (32) aufweist, der die Gleitelemente um gleiche Beträge in einer radial nach auswärts gerichteten Bewegung vom Körper (6) weg auf die Innenfläche beaufschlagt.

3. Vorrichtung nach Anspruch 2, wobei die gleitenden Elemente (18, 38, 39, 46) ein erstes und ein zweites Ende haben und wobei der Federmechanismus ein erstes und ein zweites Elemente (8, 10; 35, 36, 37; 44, 45) aufweist, die zueinander beweglich sind, mit einer Bewegungsrichtung, die im wesentlichen der Achse der Leitung (2) entspricht; und daß mehrere erste Arme (16, 41, 42, 48) vorgesehen sind, die schwenkbar an einem Ende mit dem ersten Element (18, 35) und am anderen Ende zu einem jeweils zugeordneten Gleitelement angelenkt sind; mit mehreren zweiten Armen (13, 40, 42, 47), die jeweils mit einem Ende mit dem zweiten Element (10; 35, 36, 44) und mit dem anderen Ende zu einem entsprechenden Gleitelement (18, 38, 39, 46) schwenkbar angelenkt sind und mit einer Vorspanneinrichtung (21, 22, 32, 49) mit der die ersten und zweiten Elemente für eine Relativbewegung in der Bewegungsrichtung beaufschlagt werden, um so die Gleitelemente weg von dem Körper zu drücken.

4. Vorrichtung nach Anspruch 2 oder 3, wobei die mehreren Gleitelemente (18) wenigstens drei Gleitelemente umfassen.

5. Vorrichtung nach Anspruch 4, wobei die Gleitelemente (18, 38, 39, 46) in im wesentlichen gleichen Winkel intervallen um den Umfang des Körpers (6) verteilt herum angeordnet sind.

6. Vorrichtung nach Anspruch 3, wobei das erste Element (18, 35) bezüglich der Körperachse (6) eine feste Lage hat und wobei das zweite Element (10, 36) bezüglich des Körpers (6) relativ entlang der Körperachse bewegbar ist.

7. Vorrichtung nach Anspruch 6, wobei die Vorspanneinrichtung wenigstens eine Verbindungsstange (21) umfaßt, die an einem Ende mit dem ersten Element (18, 35) verbunden ist und das zweite Element (10; 36) sich hindurch erstreckt und mit einem Federelement (32), das auf dem anderen Ende der Stange (21) angeordnet ist und das zweite Element auf das erste Element hin beaufschlagt.

8. Vorrichtung nach Anspruch 3, wobei jeder erste Arm (16, 41, 43, 48) jeweils schwenkbar mit seinem zugeordneten Gleitelement (18, 38, 39, 46) an einer ersten Stelle verbunden ist und wobei jeder zweite Arm (13; 40, 42; 47) schwenkbar mit den jeweils zugeordneten Gleitelementen (18, 38, 39, 46) an einer zweiten stelle verbunden ist, die näher an dem zweiten Element (10; 36, 35; 44) als die erste Lage ist.

9. Vorrichtung nach Anspruch 8, wobei die ersten und die zweiten Lagen einen Abstand (L) zueinander haben und wobei die ersten und zweiten Arme (16, 41, 43; 13, 40, 42) schwenkbar mit den ersten und zweiten Elementen in Lagen verbunden sind, die einen Abstand x zueinander aufweisen, wobei dieser Abstand veränderbar immer größer als (L) ist und wobei die Vorspanneinrichtung (32) das erste und zweite Element aufeinander zu beaufschlägt.

10. Vorrichtung nach Anspruch 8, wobei die ersten und zweiten Lagen einen Abstand (L) zueinander bilden und wobei die ersten und zweiten Arme (47, 48) schwenkbar mit den ersten und zweiten Elementen (44, 45) an Stellen befestigt sind, die einen Abstand x zueinander aufweisen, wobei dieser Abstand veränderbar und kleiner als (L) ist und wobei die Vorspanneinrichtung (49) die ersten und zweiten Elemente voneinander weg beaufschlägt.

11. Vorrichtung nach Anspruch 3, wobei jeder erste Arm (16) schwenkbar mit dem zugeordneten Gleitelement (18) in einer ersten Läge verbunden ist und wobei jeder zweite Arm schwenkbar mit dem zugeordneten Gleitelement (18) an einer zweiten Stelle verbunden ist, die dichter an dem ersten Element

**0 083 759**

(10) liegt als die erste Position und wobei der Federmechanismus (21, 32) das erste und zweite Element (8, 10) aufeinander zu beaufschlägt.

12. Vorrichtung nach Anspruch 2, wobei die mehreren Gleitelemente mehrere Gruppen (38; 39) von Gleitelementen umfassen und wobei die Gruppen Längs der Achse des Körpers (6) zueinander versetzt sind und wobei jede Gruppe mehrere Gleitelemente aufweist, die im wesentlichen in gleichen Abständen um die Körperachse (6) verteilt herum angeordnet sind. -

13. Vorrichtung nach Anspruch 4, wobei die mehreren Gleitelemente aus zwei Gruppen (38, 39) bestehen, und wobei jede Gruppe drei Gleitelemente aufweist, so daß insgesamt sechs Gleitelemente vorhanden sind.

**Revendications**

1. Dispositif (1) de contrôle de l'intérieur d'un conduit (2), le dispositif étant du type qui comprend un détecteur de contrôle (7), un mécanisme (6, 18, 38, 39, 46) de support du détecteur de contrôle (7) au centre dans le conduit (2), un dispositif délimitant un premier trajet (112) pour la lumière, dans un corps (6) afin qu'il transmette de la lumière d'éclairement, un premier miroir (116) destiné à réfléchir la lumière d'éclairement vers une surface interne (A) du conduit, un dispositif délimitant un second trajet (113, 118) de passage de la lumière dans le corps (6), destiné à recevoir la lumière (b) réfléchie par la surface interne (A) du conduit, un câble destiné à transmettre de l'énergie électrique à un dispositif (115, 121, 124) d'entraînement destiné à faire tourner la premier miroir (116) et une tuyauterie (118) dans laquelle est logé le dispositif délimitant le second trajet (b), caractérisé en ce qu'un second miroir (117) est destiné à recevoir et réfléchir ladite lumière (b) réfléchie par la surface interne (A) du conduit, en ce que le dispositif d'entraînement (115, 121, 124) fait tourner à la fois le premier et le second miroir (116, 117) si bien qu'ils conservent une relation constante de position l'un par rapport à l'autre, et en ce que la tuyauterie (118) dépasse à travers le premier miroir (116) sur l'axe de rotation de celui-ci.

2. Dispositif selon la revendication 1, dans lequel le mécanisme de support comporte le corps (6), plusieurs organes coulissants (18, 38, 39, 46) supportés par le corps (6) et destinés à coopérer par coulissement avec la surface interne (A) du conduit (2), et un mécanisme élastique (32) destiné à repousser les organes coulissants de manière qu'ils présentent des déplacements radiaux égaux par rapport au corps (6) vers la surface interne.

3. Dispositif selon la revendication 2, dans lequel chaque organe coulissant (18, 38, 39, 46) à une première et une seconde extrémité, et dans lequel le mécanisme élastique comporte un premier et un second organe (8, 10; 35, 36, 37; 44, 45) mobiles l'un par rapport à l'autre en direction sensiblement parallèle à un axe du conduit (2), plusieurs premiers bras (16, 41, 43, 48) articulés chacun à une première extrémité sur le premier organe (18, 35) et à une autre extrémité sur un organe coulissant respectif, plusieurs seconds bras (13, 40, 42, 47) articulés chacun à une première extrémité sur le second organe (10; 35, 36, 44) et à une autre extrémité sur un organe coulissant respectif (18, 38, 39, 46) et un dispositif de rappel (21, 22, 32, 49) agissant sur les premiers et seconds organes et destiné à assurer leur déplacement relatif dans la direction de déplacement afin que les organes coulissants soient écartés du corps.

4. Dispositif selon l'une des revendications 2 et 3, dans lequel les organes coulissants (18) comportent au moins trois organes coulissants.

5. Dispositif selon la revendication 4, dans lequel les organes coulissants (18, 38, 39, 46) sont à des intervalles angulaires sensiblement égaux autour de la périphérie du corps (6).

6. Dispositif selon la revendication 3, dans lequel le premier organe (18, 35) a une position fixe suivant l'axe du corps (6), et le second organe (10, 36) est mobile par rapport au corps (6) le long de l'axe du corps.

7. Dispositif selon la revendication 6, dans lequel le dispositif de rappel comporte au moins une tige (21) de raccordement fixée à une première extrémité au premier organe (18, 35) et passant dans le second organe (10; 36), et un organe formant ressort (32) fixé à la tige (21) à son autre extrémité et repoussant le second organe vers le premier.

8. Dispositif selon la revendication 3, dans lequel chaque premier bras (16, 41, 43, 48) est articulé sur l'organe coulissant respectif (18, 38, 39, 46) dans une première position et chaque second bras (13; 40, 42; 47) est articulé sur son organe coulissant respectif (18, 38, 39, 46) à une seconde position qui est plus proche du second organe (10; 36, 35; 44) que la première position.

9. Dispositif selon la revendication 8, dans lequel la première et la seconde position sont séparées par une distance (L), et le premier et le second bras (16, 41; 43; 13, 40, 42) sont fixés de manière articulée sur le premier et le seconde organe à des positions séparées par une distance (x) qui est variable et qui est toujours supérieure à la distance (L), le dispositif de rappel (32) repoussant le premier et le second organe l'un vers l'autre.

10. Dispositif selon la revendication 8, dans lequel la première et la seconde position sont séparées par une distance (L) et le premier et le second bras (47, 48) sont fixés de manière articulée au premier et au second organe (44, 45) à des positions séparées par une distance (x) qui est variable et qui est toujours inférieure à la distance (L), le dispositif de rappel (49) écartant le premier et le second organe l'un de l'autre.

11. Dispositif selon la revendication 3, dans lequel chaque premier bras (16) est articulé sur l'organe coulissant respectif (18) dans une première position, et chaque second bras (13) est articulé sur son organe

11

**0 083 759**

coulissant respectif (18) à une seconde position qui est plus proche du premier organe (10) que la première position, le mécanisme élastique (21, 32) repoussant le premier et le second organe (8, 10) l'un vers l'autre.

12. Dispositif de contrôle selon la revendication 2, dans lequel plusieurs organes coulissants forment plusieurs groupes (38; 39) d'organes coulissants, les groupes étant décalés mutuellement suivant l'axe du corps (6), chaque groupe comprenant plusieurs organes coulissants placés à des intervalles sensiblement égaux autour de l'axe du corps (6).

13. Dispositif de contrôle selon la revendication 4, dans lequel les organes coulissants forment deux groupes (38, 39), chaque groupe étant constitué de trois organes coulissants, si bien que le nombre total d'organes coulissants est égal à 6.

## FIG. 1

## FIG. 3

FIG. 2

## FIG. 4

0 083 759

FIG. 6

FIG. 7

FIG. 5

## FIG. 8
## PRIOR ART

## FIG. 9
## PRIOR ART

FIG. 10
PRIOR ART

FIG. 11